# EUROPÄISCHE PATENTSCHRIFT

(11) **EP 0 633 212 B1**
(45) Veröffentlichungstag und Bekanntmachung des Hinweises auf die Patenterteilung: **26.03.1997**
(21) Anmeldenummer: 94105963.6
(22) Anmeldetag: 18.04.1994
(51) Int. Cl.: B65H 29/02, B65H 29/04, B65G 47/29

(54) **Endlos umlaufende Stückgut-Transportvorrichtung mit individuellen Transportorganen**
Endless circulating transport device for unit load with individual transport elements
Dispositif de transport circulant sans fin pour charge isolée avec organes de transport individuels

(30) Priorität: 07.07.1993 CH 2040/93
(43) Veröffentlichungstag der Anmeldung: 11.01.1995
(73) Patentinhaber: Ferag AG, CH-8340 Hinwil (CH)
(72) Erfinder: Eberle, Jürg, CH-8340 Hinwil (CH)
(74) Vertreter: Patentanwälte Schaad, Balass, Menzl & Partner AG

(56) Entgegenhaltungen:
- EP-A- 0 309 702
- EP-A- 0 323 557
- WO-A-90/12673
- DE-A- 2 748 984
- DE-A- 2 822 060
- GB-A- 966 402

## Beschreibung

Die vorliegende Erfindung betrifft eine endlos umlaufende Stückgut-Transportvorrichtung, insbesondere für Druckereiprodukte, gemäss dem Oberbegriff des Anspruchs 1 und eine Fördereinrichtung mit einer derartigen Transportvorrichtung.

Eine Stückgut-Transportvorrichtung dieser Art ist in der EP-A-0 309 702 und der entsprechenden US-Patentschrift Nr. 4,887,809 offenbart. Diese weist eine endlose Führung auf, an der eine Anzahl von Transportorganen gleitend geführt sind. Die Transportorgane sind mittels eines Zahnriemens, der von an den Transportorganen angeordneten Befestigungselementen wellenförmig verformt ist, miteinander verbunden. Am Anfang und am Ende der förderwirksamen Strecke sind mit je einem eigenen Antrieb verbundene Nockenscheiben angeordnet, deren Nocken auf die Transportorgane einwirken, um diese im Anfangs- und Endbereich der förderwirksamen Strecke anzutreiben und in ihrer gegenseitigen Lage zu positionieren. Der Abstand der Transportorgane ausserhalb dem Wirkbereich der Nockenscheiben wird durch die Federwirkung des wellenförmig verformten Zahnriemens ausgeglichen. Unterschiede im Uebernahmetakt und Abgabetakt oder in deren Phasenlage werden durch Vergrösserung oder Verkleinerung des Abstandes zwischen den Transportorganen aufgefangen. Bei dieser bekannten Transportvorrichtung nehmen die Nockenscheiben mit jedem Takt jeweils das nächstfolgende Transportorgan positionsgerecht mit.

Ist am Anfang der förderwirksamen Strecke kein Druckereiprodukt zur Mitnahme durch ein Transportorgan bereit, läuft dieses unter Beibehaltung der Lücke im Druckereiproduktestrom weiter. Analog ist es mit der bekannten Transportvorrichtung nicht möglich, die Abgabe eines Druckereiproduktes zurückzuhalten.

Eine weitere ähnlich wirkende Transportvorrichtung ist aus der CH-Patentschrift Nr. 610 276 und der entsprechenden US-Patentschrift Nr. 4,072,228 bekannt. Hier sind die Transportorgane über Schleppverbindungen miteinander verbunden und ihr Antrieb erfolgt über Schneckenräder, die am Anfang und am Ende der förderwirksamen Strecke auf an den Transportorganen angeordnete Folgerollen einwirken. Die Antriebsgeschwindigkeit des ersten Schneckenrades ist durch den Takt eines die Druckereiprodukte zubringenden Zuförderers und jene des zweiten Schneckenrades durch einen Wegförderer bestimmt.

Eine weitere Transportvorrichtung für Flächenerzeugnisse ist in der GB-Patentschrift Nr. 966,402 offenbart. Diese weist eine in einer Vertikalebene angeordnete, in sich geschlossene Führung auf, entlang der voneinander unabhängige Transportorgane umlaufen. In einem in Umlaufrichtung gesehen abwärts gerichteten Bereich der Führung ist eine steuerbare Sperre angeordnet, die jeweils ein Transportorgan zurückhält, bis ein in den Greifer des Transportorgans eingeführtes Flächenerzeugnis die Sperre löst. Infolge der Schwerkraft bewegt sich dann das betreffende Transportorgan mit dem Flächenerzeugnis zum Ende der förderwirksamen Strecke, wo das Transportorgan von einer umlaufend angetriebenen Transportkette erfasst wird, um entlang dem ansteigenden Abschnitt der Führung zum höchsten Punkt der Umlaufbahn gebracht zu werden. Am Ende der förderwirksamen Strecke wird mittels einer Kulisse der Greifer des Transportorgans geöffnet, um das Flächenerzeugnis abzugeben. Mit dieser Vorrichtung ist wohl sichergestellt, dass jedes Transportorgan am Anfang der förderwirksamen Strecke ein Flächenerzeugnis zum Weitertransport übernimmt. Eine getaktete Abgabe am Ende der förderwirksamen Strecke ist aber nicht möglich.

Weiter offenbart die DE-A-28 22 060 und die entsprechende US-Patentschrift Nr. 4,201,286 eine Transportvorrichtung mit einer entlang der Führung verlaufenden, umlaufend angetriebenen Kette, an welche am Anfang der förderwirksamen Strecke über ein Schleusenrad getaktete Transportorgane angekoppelt werden. Das Schleusenrad ist im Takt eines Zuförderers angetrieben, der Druckereiprodukte in Schuppenformation zubringt und in den geöffneten Greifer des vom Schleusenrad erfassten Transportorgans einführt. Am Ende der förderwirksamen Strecke ist ein mit einem Wegförderer gekoppeltes Nockenrad angeordnet, das jeweils ein Transportorgan mitnimmt, um einem Greifer des Wegförderers das Druckereiprodukt zu übergeben. Die voneinander unabhängigen Transportorgane sind derart ausgebildet, dass die Ankopplung an die Antriebskette gelöst wird, sobald Transportorgane aufeinander auflaufen. Dem Schleusenrad ist ein steuerbares Sperrelement vorgelagert, das jenes Transportorgan über einen Takt zurückhält, dem ein fehlendes Druckereiprodukt in der Schuppenformation zugeteilt würde. Dadurch können keine leeren Greifer durch die Schleuse erfasst und weitergefördert werden. Ein ähnliches Sperrelement ist den Nockenrad vorgelagert, um die Abgabe von Druckereiprodukten an den Wegförderer vorübergehend zu unterbrechen. Diese bekannte Transportvorrichtung ist aufwendig im Aufbau und eignet sich nur für im wesentlichen geradlinige Förderstrecken.

Ausgehend von diesem Stand der Technik ist es eine Aufgabe der vorliegenden Erfindung, eine gattungsgemässe Stückgut-Transportvorrichtung zu schaffen, die bei einfachem Aufbau in weitem Rahmen beliebig geformte Förderstrecken zulässt und am Anfang der förderwirksamen Strecke das Schliessen von Lücken und am Ende der förderwirksamen Strecke das Bilden von Lücken im Stückgutstrom ermöglicht.

Diese Aufgabe wird durch eine gattungsgemässe Transportvorrichtung erzielt, die die Merkmale im Kennzeichen des Anspruchs 1 aufweist.

Erfindungsgemäss sind die Federelemente zur ausschliesslichen Druckkraftübertragung zwischen den Transportorganen ausgebildet. Sie können somit keine Zugkraft auf die Transportorgane ausüben. Diese sind somit in Zugrichtung voneinander unabhängig. Dies erlaubt das Antreiben eines Transportorgans mittels Antriebsmitteln einer Antriebsvorrichtung und das gleichzeitige Zurückhalten des in Umlaufrichtung gesehen nachfolgenden Transportorgans. Die Federelemente übertragen die Antriebskraft von von den Antriebsmitteln unmittelbar angetriebenen Transportorganen auf diesen in Umlaufrichtung vorlaufende Transportorgane. Es werden dadurch grosse Beschleunigungen vermieden, was zu einem ruhigen Lauf führt. Weiter lassen die Federelemente einen grossen Unterschied in der Anzahl der sich jeweils zwischen den Antriebsvorrichtungen befindlichen Transportorgane zu. Dies erlaubt die Variation des Uebernahme- und Abgabetaktes in weiten Grenzen. Da eine reine Druckkraftübertragung zwischen den Transportorganen keine feste Verbindung verlangt, kann die Führung beliebige Krümmungen mit kleinen Krümmungsradien aufweisen.

Eine besonders bevorzugte einfache Ausbildungsform der erfindungsgemässen Transportvorrichtung ist im Anspruch 2 angegeben. Mit einem steuerbaren Sperrelement wird auf einfache Weise die Mitnahme von Transportorganen durch die Antriebsmittel verhindert.

Einen besonders ruhigen Lauf der Transportvorrichtung wird durch die Massnahmen gemäss Anspruch 3 erzielt. Eine Rücklaufsperre verhindert das Zurücklaufen der Transportorgane in den Wirkbereich der Antriebsmittel, falls das nachfolgende Transportorgan verzögert angetrieben wird. Ein in Umlaufrichtung U gesehen, den Antriebsvorrichtungen folgender Abschnitt der Führung kann somit ohne weiteres eine Steigung aufweisen.

Ein besonders einfacher positionsgerechter Antrieb der Transportorgane wird mit einer Transportvorrichtung, die die Merkmale des Anspruchs 4 aufweist, erreicht.

Eine weitere, besonders bevorzugte Ausbildungsform der erfindungsgemässen Transportvorrichtung, ist im Anspruch 5 angegeben. Sie ermöglicht das Antreiben der Transportorgane in einem Antriebsabschnitt, der sowohl geradlinige als auch gekrümmte Abschnitte aufweist. Die Lage der Transportorgane ist im Bereich dieses Antriebsabschnitts jeweils genau definiert, was die Flexibilität bezüglich der Üebernahme und Abgabe der Stückgüter gewährleistet. Ueberdies kann der Abstand der Transportorgane durch die Grösse der Antriebsglieder in weiten Grenzen variiert werden. Da diese bügelartig ausgebildet sind, können sie problemlos den Unterschied im geradlinig gemessenen Abstand zwischen den Anlenkpunkten an die Kette im Bereich der Räder und dem geradlinigen Bereich zwischen den Rädern aufnehmen.

Die Bewegung der Transportorgane wird in bevorzugter Weise gemäss Anspruch 6 gedämpft. Bei Geschwindigkeitsunterschieden zwischen den Transportorganen und dem Dämpfungselement entstehen Reibungskräfte, da das Dämpfungselement an den Transportorganen geführt ist.

Die Ausbildungsform der Transportvorrichtung gemäss Anspruch 7 gewährleistet eine sichere Führung des Dämpfungselementes im Bereich der Antriebsvorrichtungen, auch wenn keine Transportorgane in Eingriff mit den Antriebsgliedern sind.

Von besonderem Vorteil ist der Einsatz eines Dämpfungselementes aus gummielastischem und abriebfesten Material. Durch Vorspannen des Dämpfungselements lassen sich unterschiedliche Dämpfungswirkungen erzielen.

Eine besonders einfache Führung der Federelemente ist durch die besonders bevorzugte Ausbildungsform gemäss Anspruch 9 gewährleistet. Es können bezüglich ihrem Durchmesser äusserst lange Schraubendruckfedern verwendet werden, ohne dass diese bei Druckbeanspruchung knicken.

Ueberdies können mehrteilige und/oder, wie im Anspruch 10 angegeben, von den Transportorganen abgetrennte Schraubendruckfedern verwendet werden.

Ein besonders ruhiger Lauf der erfindungsgemässen Transportvorrichtung lässt sich durch das Vorsehen von Dämpfungsorganen gemäss Anspruchs 11 erzielen. Diese sind insbesondere dann wirksam, wenn Federelemente und Transportorgane aufeinander auflaufen.

Die Ausbildungsform gemäss Anspruch 12 erlaubt eine Vorratsbildung von Transportorganen bei den Antriebsvorrichtungen, selbst wenn zwischen diesen Abschnitte der Führung Steigungen aufweisen und Lücken zwischen Transportorganen vorhanden sind.

Eine Fördereinrichtung gemäss Anspruch 13 gibt eine besonders bevorzugte Einsatzmöglichgkeit der Transportvorrichtung an.

Die Erfindung wird nun anhand eines in der Zeichnung dargestellten Ausführungsbeispiels näher beschrieben. Es zeigen rein schematisch:
- Fig. 1: in Ansicht eine Fördereinrichtung mit einem Zuförderer, einem Wegförderer und einer endlos umlaufenden Stückgut-Transportvorrichtung zum Transportieren der vom Zuförderer zugeführten Druckereiprodukte zum Wegförderer;
- Fig. 2: einen Längsschnitt durch in einer Führung der Transportvorrichtung umlaufenden Wagen von Transportorganen;
- Fig. 3: eine Ansicht der Fig. 2 in Pfeilrichtung III mit einem an einem Wagen befestigten Greifer;
- Fig. 4: in Ansicht und teilweise geschnitten eine Antriebsvorrichtung der Transportvorrichtung gemäss Fig. 1;

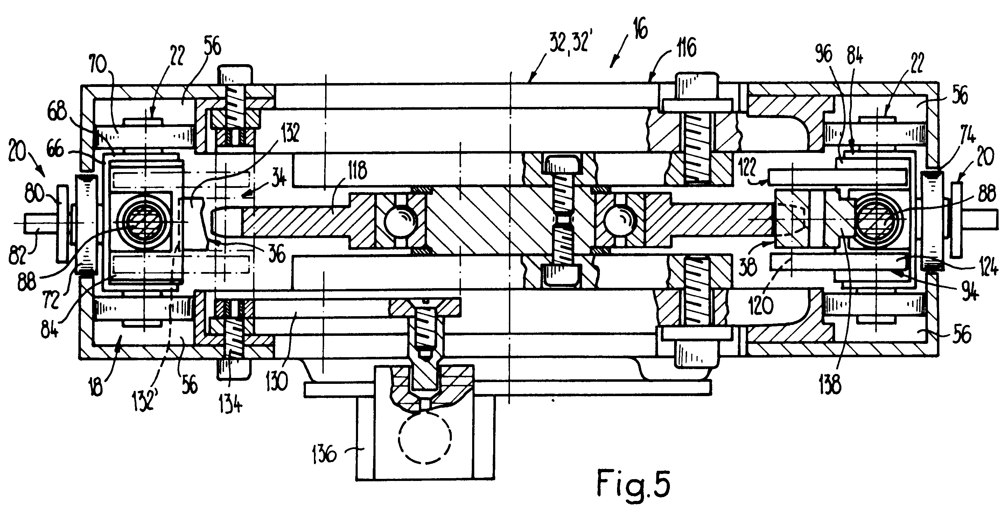

- Fig. 5: einen Schnitt entlang der Linie V-V der Fig. 4; und
- Fig. 6: ein in der Fig. 4 mit der Linie VI-VI bezeichneter Vertikalschnitt durch einen Teil der Antriebsvorrichtung.

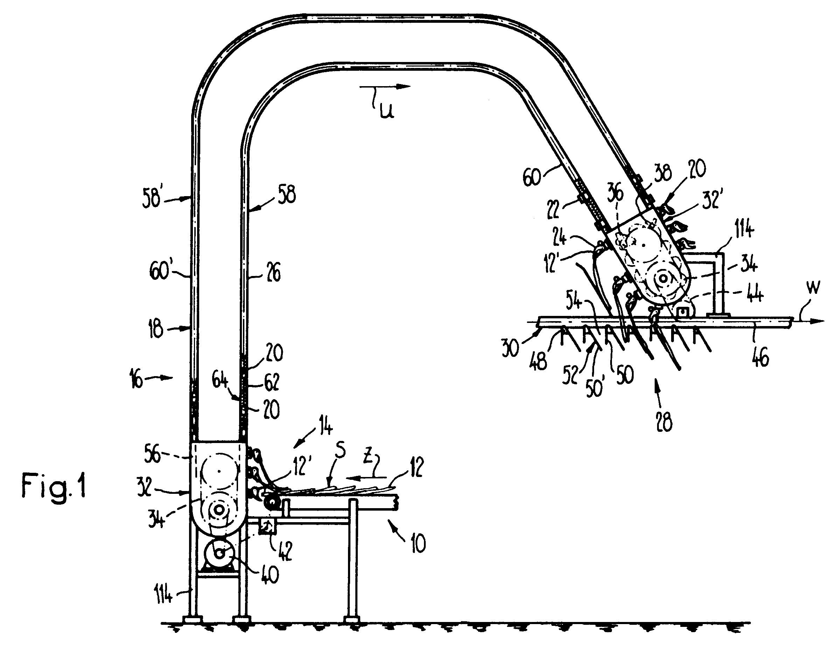

Die in der Fig. 1 gezeigte Fördereinrichtung weist einen als Bandförderer ausgebildeten Zuförderer 10 auf, der dazu bestimmt ist, in Zuführrichtung Z Druckereiprodukte 12 einer Uebernahmestelle 14 einer Transportvorrichtung 16 zuzuführen. Am Ende des in horizontaler Richtung verlaufenden Zuförderers 10 läuft eine Führung 18 der Transportvorrichtung 16 in vertikaler Richtung vorbei, in welcher eine Vielzahl von Transportorganen 20 hintereinander angeordnet sind und in Umlaufrichtung U umlaufen. Letztere verläuft bei der Uebernahmestelle 14 von unten gegen oben.

Jedes Transportorgan 20 weist einen Wagen 22 auf, der in der kanalartigen Führung 18 freibeweglich geführt ist und der einen steuerbaren Greifer 24 trägt. Dieser ist dazu bestimmt, bei der Uebernahmestelle 14 ein vom Zuförderer 10 zugeführtes Druckereiprodukt 12 zu übernehmen und entlang der förderwirksamen Strecke 26 zu einer Abgabestelle 28 zu fördern und dort einem Wegförderer 30 zu übergeben.

Am Anfang und am Ende der förderwirksamen Strecke 26, d.h. bei der Uebernahmestelle 14 und Abgabestelle 28, weist die Transportvorrichtung 16 je eine Antriebsvorrichtung 32,32' auf. Diese sind identisch ausgebildet und weisen je ein umlaufend angetriebenes Antriebsmittel 34 zum Antreiben der Wagen 22, diesen in Umlaufrichtung U gesehen vorgeschaltete, gesteuerte Sperrmittel 36 zum Verhindern des Einfahrens von Transportorganen 20 in den Wirkbereich der Antriebsmittel 34, sowie eine letzteren nachgeschaltete Rücklaufsperre 38, zum Verhindern des Zurücklaufens von Transportorganen 20 in den Wirkbereich der Antriebsmittels 34, auf.

Die Antriebsvorrichtungen 32,32' sind für sich steuerbar. Der Antrieb der Antriebsvorrichtung 32 bei der Uebernahmestelle 14 erfolgt mittels eines Antriebsmotors 40, der zugleich den Zuförderer 10 antreibt. In der Verbindung zwischen dem Antriebsmotor 40 und dem Zuförderer 10 ist ein einstellbares, auch zum Einstellen der Phasenlage zwischen dem Zuförderer 10 und den Antriebsmitteln 34 geeignetes Getriebe 42 vorhanden. Die Antriebsmittel 34 der Antriebsvorrichtung 32' bei der Abgabestelle 28 sind vom Wegförderer 30 angetrieben, wie dies anhand eines Kettentriebes 44 angedeutet ist.

Der Wegförderer 30 weist an einem in Wegführrichtung W umlaufend angetriebenen Zugorgan 46, beispielsweise einer Förderkette, hintereinander angeordnete Klammern 48 auf, die je die einander zugewandten Produktehälften 50,50' eines gefalteten Druckereierzeugnisses 52 festhalten. Diese Druckereierzeugnisse 52 bilden somit bei der Abgabestelle 28 gegen oben offene Taschen 54, in die hinein mittels der Transportvorrichtung 16 je ein Druckereiprodukt 12 eingeführt wird. Bezüglich dem Aufbau und der Funktionsweise des Wegförderers 30 wird auf die EP-A-0 536 514 und die entsprechende US-Patentschrift Nr. 5,188,349 verwiesen.

Die Führung 18 ist im Bereich der Antriebsvorrichtungen 32,32' durch nutartige, gegeneinander hin offene Führungskanäle 56 und zwischen den Antriebsvorrichtungen 32,32' durch im Querschnitt C-förmige Führungsschienen 58,58' gebildet. Die Führungsschiene 58 schliesst in Umlaufrichtung U gesehen an die Führungskanäle 56 der Antriebsvorrichtung 32 mit einem in vertikaler Richtung verlaufenden Abschnitt an. Diesem folgt ein Bogenabschnitt, an den ein Horizontalabschnitt anschliesst. Ein nachfolgender Bogenabschnitt stellt die Verbindung zu einem geradlinig verlaufenden Schienenabschnitt 60 her, der in Umlaufrichtung U gesehen ein Gefälle aufweist und unmittelbar zum Führungskanal 56 der Antriebsvorrichtung 32' führt. Die Führungsschiene 58' verläuft parallel zur Führungsschiene 58 und weist einen an die Antriebsvorrichtung 32 angrenzenden Schienenabschnitt 60' auf, der in Umlaufrichtung U gesehen ebenfalls Gefälle, im vorliegenden Fall verläuft er in vertikaler Richtung, aufweist.

Zwischen jeweils zwei Transportorganen 20 ist ein als Schraubendruckfeder 62 ausgebildetes Federelement 64 angeordnet. Die Schraubendruckfedern 62 sind an den Transportorganen 20 nicht befestigt, so dass sie ausschliesslich Druckkräfte übertragen können.

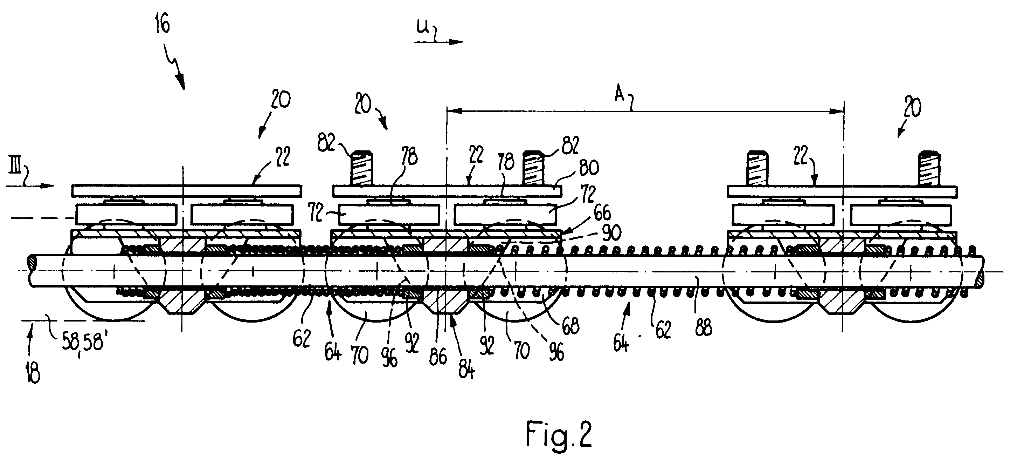

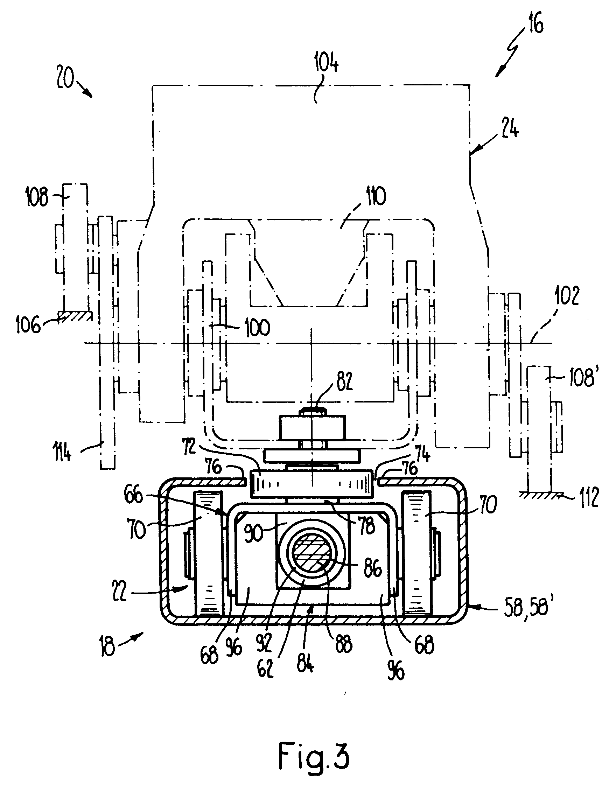

Der Aufbau der Transportorgane 20 und die Anordnung der Schraubendruckfedern 62 wird nun anhand der Fig. 2 und 3 näher beschrieben. Die Wagen 22 der Transportorgane 20 weisen je ein im Querschnitt U-förmiges Fahrgestell 66 auf, an dessen Seitenflanken 68 je zwei Fahrrollen 70 frei drehbar gelagert sind. Diese sind in der im Querschnitt C-förmigen Führungsschiene 58,58' und im Bereich der Antriebsvorrichtungen 32,32' in den Führungskanälen 56 geführt. Die seitliche Führung erfolgt durch jeweils zwei in Umlaufrichtung U hintereinander angeordnete Führungsrollen 72, die den in Längsrichtung der Führung 18 verlaufenden Führungsschlitz 74 durchgreifen und mit den diesen begrenzenden, einander zugewandten Flankenenden 76 zusammenwirken. Die Führungsrollen 72 sind an Tragachsen 78 frei drehbar gelagert, die einerends am Fahrgestell 66 befestigt sind und andernends eine Befestigungsplatte 80 tragen. Zum Befestigen der Greifer 24 stehen von der Befestigungsplatte 80 Schraubenschäfte 82 ab.

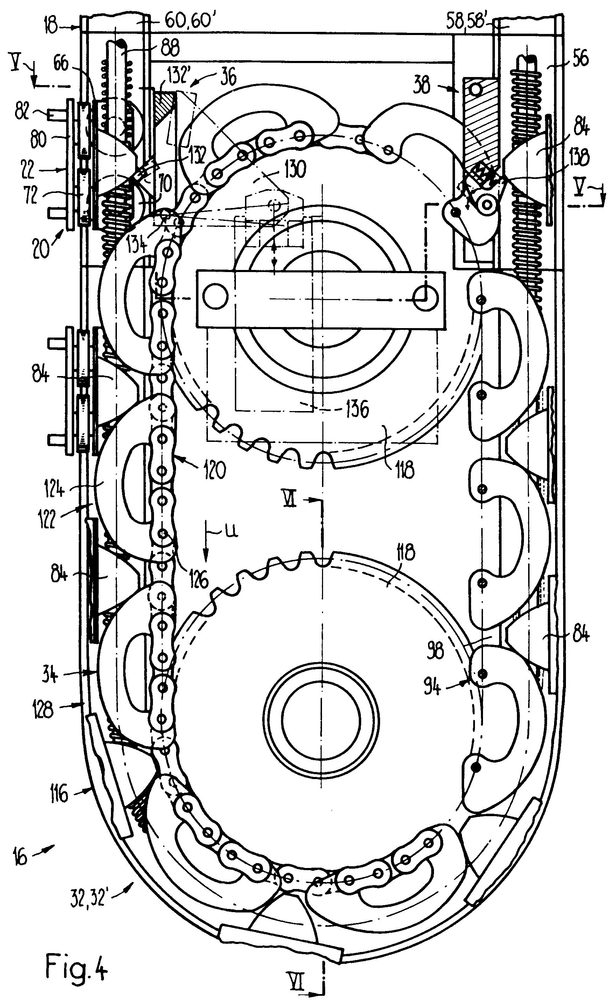

Am Fahrgestell 66 ist ein im Längsschnitt etwa trapezförmiger Mitnahmekörper 84 befestigt, der einen in Längsrichtung verlaufenden Durchlass 86 aufweist. Dieser ist von einem im Querschnitt geringfügig kleineren Rundriemen 88 aus gummielastischem Material lose durchgriffen. Der die Mitnahmekörper 84 sämtlicher Transportorgane 20 durchgreifende Rundriemen 88 dient einerseits zum Dämpfen der Bewegung der Wagen 22 und andererseits zum Führen der Schraubendruckfedern 62, die den Rundriemen 88 lose umgreifen, und der Wagen 22. Die Mitnahmekörper 84 weisen auf der, in Umlaufrichtung U gesehen, hinteren und vorderen Seite je eine nutartige Ausnehmung 90 auf, deren rechtwinklig zur Umlaufrichtung U verlaufender Boden eine Stützfläche für ein hülsenartiges Dämpfungsorgan 92 bildet. Dieses ist vom Rundriemen 88 ebenfalls lose durchgriffen, ist einerends am Mitnahmekörper 84 befestigt und andernends dazu bestimmt, mit dem diesseitigen Ende der entsprechenden Schraubendruckfeder 62 zusammenzuwirken. Die vollständig auf Block zusammengedrückten Schraubendruckfedern 62 weisen eine derartige Länge auf, dass die Wagen 22 einander nicht berühren, wie dies in der Fig. 2 anhand des mittleren und links davon gezeigten Wagens 22 dargestellt ist. Sind die Schraubendruckfedern 62 entspannt und liegen ihre Enden an Wagen 22 an, nehmen diese einen Mittenabstand A an, der in etwa der Zahnteilung der gezahnten Antriebselemente 94 der Antriebsmittel 34, gemessen auf einem zum Kettenrad 118 koaxialen Teilkreis, entspricht (vergleiche Fig. 4). Da die Schraubendruckfedern 62 an den Wagen 22 nicht befestigt sind, können letztere selbstverständlich auch einen grösseren Abstand als den Mittenabstand A einnehmen.

Die beidseits der Ausnehmungen 90 sich bis zu den Seitenflanken 68 erstreckenden Teile der Mitnahmekörper 84 bilden zahnartige Mitnahmeorgane 96, die zum Eingreifen in die Zahnlücken 98 der Antriebselemente 94 bestimmt sind (vergleiche Fig. 4).

Wie Fig. 3 zeigt, weisen die strichpunktiert angedeuteten Greifer 24 einen U-förmigen Tragbügel 100 auf, der mittels den Schraubenschäften 82 an der Befestigungsplatte 80 befestigt ist. Am Tragbügel 100 ist eine rechtwinklig zur Umlaufrichtung U verlaufende, durch ihre strichpunktierte Achse angedeutete Welle 102 frei drehbar gelagert, auf der zwei Greiferbacken 104 frei drehbar sitzen. Die eine dieser Greiferbacken 104 ist mit einer mit einer Lagekulisse 106 zusammenwirkenden Steuerrolle 108 verbunden. Die Welle 102 ist einerseits über einen Hebel an eine mit einer Schliesskulisse 112 zusammenwirkenden weiteren Steuerrolle 108' gekoppelt und andererseits über eine Feder 110 mit der anderen Greiferbacke 104 verbunden. Weiter weist der Greifer 24 eine Verriegelungseinrichtung 114 auf, um in Schliessstellung bei gespannter Feder 110 die Welle 102 mit der mit der Steuerrolle 108 verbundenen Greiferbacke 104 lösbar zu verriegeln. Greifer 24 dieser Art sind in der EP-Patentanmeldung Nr. 93 100 004.6 bzw. der entsprechenden US-Patentanmeldung Nr. 08/018,749 und CH-Patentanmeldung Nr. 00 107/93-2 offenbart.

Die Antriebsvorrichtungen 32,32' weisen je ein an einem Gestell 114 befestigtes Antriebsgehäuse 116 auf. In ihm sind zwei parallelachsige Kettenräder 118 frei drehbar gelagert, wobei eines dieser Kettenräder 118 mit dem Antriebsmotor 40 bzw. über den Kettentrieb 44 mit dem Wegförderer 30 zu Antriebszwecken verbunden ist. Um die Kettenräder 118 ist eine Kette 120 geführt, an der hintereinander bügelartig ausgebildete, jeweils mehrere Kettenglieder übergreifende Antriebsglieder 122 angeordnet sind. Jedes Antriebsglied 122 weist auf beiden Seiten der Kette 120 je einen C-förmigen Antriebsbügel 124 auf. Zur Befestigung an der Kette 120 sind die Antriebsbügel 124 in ihren Endbereichen von den betreffenden Kettenbolzen 126 durchgriffen. Die hintereinander angeordneten Antriebsbügelpaare begrenzen jeweils eine Zahnlücke 98, die dazu bestimmt ist, den Mitnahmekörper 84 bzw. dessen Mitnahmeorgane 96 im Bereich eines Antriebsabschnittes 128, in welchem die Führung 18 entlang der Umlaufbahn der Antriebsbügel 124 verläuft, aufzunehmen. Die Führung 118 bzw. die Führungskanäle 56 verlaufen im Antriebsabschnitt 128 U-förmig und somit im Bereich der beiden Kettentrume zwischen den Kettenrädern 118 und im Bereich des jeweils angetriebenen Kettenrades 118 im wesentlichen parallel zur Kette 120. Um die Polygonalwirkung zu reduzieren, können die Führungskanäle 56 entsprechend der EP-Patentanmeldung Nr. 92 121 366.6 bzw. der entsprechenden US-Patentanmeldung Nr. 08/002,182 geformt sein.

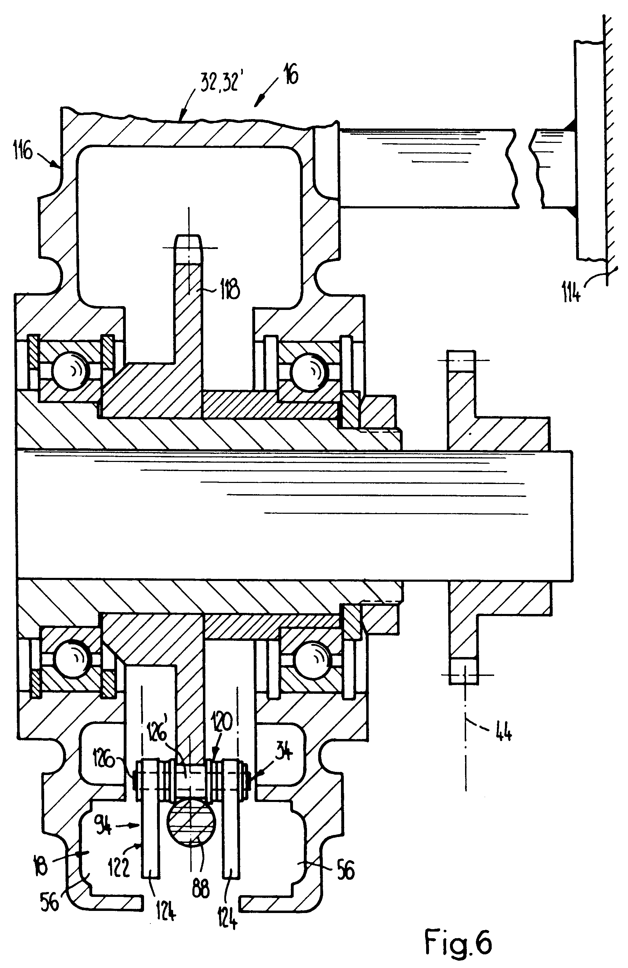

Der Rundriemen 88 verläuft zwischen den Antriebsbügeln 124 und liegt bei der Umlenkung um das Kettenrad 118 an den Kettenhülsen 126' an, falls zwischen aufeinanderfolgenden Transportorganen 20 eine Lücke vorhanden ist (siehe Fig. 6). Der Rundriemen 88 ist somit auch in diesem Fall im Bereich der Antriebsvorrichtungen 32,32' sicher geführt. Die Antriebsbügel 124 bestehen vorzugsweise aus Kunststoff und können somit problemlos die Aenderung des Abstandes zwischen den entsprechenden Kettenbolzen 126 aufnehmen.

Am Anfang des Antriebsabschnittes 128 sind die Sperrmittel 36 angeordnet. Diese weisen einen an einem Dreieckhebel 130 befestigten Sperrkörper 132 auf. Der Dreieckhebel ist an der Schwenkachse 134 gelagert und an ein schnellschaltendes Zylinder-Kolbenaggregat 136 angekuppelt. Mittels diesem Zylinder-Kolbenaggregat 136 ist der Sperrkörper 132 aus einer, in der Fig. 4 mit ausgezogenen Linien gezeigten Sperrstellung 132' in eine strichpunktiert angedeutete Rühestellung und wieder zurück verschwenkbar. In Sperrstellung 132' greift der Sperrkörper 132 in die Bewegungsbahn der Mitnahmekörper 84 ein, um zu verhindern, dass das betreffende mit seinem Mitnmahmekörper 84 auf den Sperrkörper 132 auflaufende bzw. an diesem anliegende Transportorgan 20 in den Wirkbereich der Antriebsmittel 34 somit in den Wirkbereich der Antriebsbügel 124 gelangen kann. In Ruhestellung befindet sich der Sperrkörper 132 ausserhalb der Bewegungsbahn der Mitnahmekörper 84, wodurch das jeweils an ihm vorbeilaufende Transportorgan 20 in den Wirkbereich der Antriebsmittel 34 gelangt. Die Position des in den Antriebsabschnitt 128 einlaufenden Transportorgans 20 ist dabei durch die Schraubendruckfeder 62 zwischen diesem Transportorgan 20 und dem vorauslaufenden Transportorgan 20 gegeben, dessen Mitnahmeorgane 96 in einer Zahnlücke 98 gefangen sind. Die C-förmigen Antriebsbügel 124 und der Einlauf der Mitnahmeorgane 96 in die Zahnlücken 98 im Bereich der Umlenkung der Antriebsbügel 124 um das obere Kettenrad 118 lassen dabei eine erhebliche Toleranz im Abstand ohne weiteres zu. Beispielsweise ist der Einlauf der Mitnahmeorgane 96 aufeinanderfolgender Transportorgane 20 in aufeinanderfolgende Zahnlücken 98, bei einem Mittenabstand der Zahnlücken 98 von 95 mm im geradlinigen Bereich der Kette 120 und von 115 mm bei der Umlenkung um die Kettenräder 118, selbst dann sichergestellt, wenn der Mittenabstand der Transportorgane 20 75 mm bei vollständig zusammengedrückten Schraubendruckfedern 62 und 129 mm bei entspannten Schraubendruckfedern 62 beträgt. Das Zurückziehen des Sperrkörpers 132 aus der Sperrstellung 132' in die Ruhestellung erfolgt jeweils in Abstimmung zur Bewegung der kontinuerlich umlaufenden Antriebsmittel 34, um sicherzustellen, dass das freigegebene Transportorgan 20 mit seinen Mitnahmeorganen 96 in eine Zahnlücke 98 zu liegen kommt, da bei durch die Sperrmittel 36 zurückgehaltenen Transportorganen 20 eine Lücke zum vorauslaufenden Transportorgan 20 bzw. ein Abstand zur entsprechenden Schraubendruckfeder 62 vorhanden ist.

Am Ende des Antriebsabschnittes 128 ist die Rücklaufsperre 38 angeordnet. Sie weist eine schwenkbar gelagerte, vorgespannte Klinke 138 auf, die durch den jeweils vorbeilaufenden Mitnahmekörper 84 eines Transportorgans 20 zurückgedrängt wird und welche nach dem Vorbeilaufen den Mitnahmekörper 84 hintergreift. Dadurch wird sichergestellt, dass das betreffende Transportorgan 20 nicht in den Wirkbereich der Antriebsmittel 34 zurückgleiten kann. Der Vollständigkeit halber sei erwähnt, dass die Klinke 138 den betreffenden Mitnahmekörper 84 jeweils hintergreift, kurz bevor die Antriebsbügel 124 ab diesem ablaufen.

Die in den Figuren gezeigte Einrichtung funktioniert wie folgt: Der Zuförderer 10 transportiert die Druckereiprodukte in Schuppenformation S zur Uebernahmestelle 14, wobei jedes Druckereiprodukt 12 auf dem nachlaufenden aufliegt. Der Zuförderer 10 und die Antriebsvorrichtung 32 sind dabei derart synchronisiert, dass in jeden geöffneten Greifer 24 ein Druckereiprodukt 12 mit der Vorlaufkante 12' voraus einläuft. Der Greifer 24 wird dann geschlossen und das erfasste Druckereiprodukt 12 gegen oben in Umlaufrichtung U weggefördert und vom nachfolgenden, zugeführten Druckereiprodukt 12 abgehoben. Beim Erfassen der Druckereiprodukte 12 befinden sich die Transportorgane 20 im Antriebsabschnitt 128, wodurch die Position und die Geschwindigkeit der Greifer 24 genau vorgegeben ist. Die Transportorgane 20 werden dann in Umlaufrichtung U gestossen, indem jeweils die Schraubendruckfedern 62 die Antriebskraft an das jeweils vorauslaufende Transportorgan 20 übertragen.

Erkennt nun ein Abtastorgan eine Lücke in der Schuppenformation S, beispielsweise dass ein Druckereiprodukt 12 fehlt, wird durch Aktivieren der Sperrmittel 36 das diesem fehlenden Druckereiprodukt 12 zugeordnete Transportorgan 20 um einen Takt, fehlen in der Schuppenformation S hintereinander mehrere Druckereiprodukte 12, um die entsprechende Anzahl Takte, zurückgehalten, so dass das Zurückgehaltene Transportorgan 20 jeweils das erste der Lücke folgende Druckereiprodukt 12 erfassen kann. Dadurch werden Lücken in der Druckereiproduktefolge geschlossen.

In analoger Weise wie das Übernehmen der Druckereiprodukte 12 erfolgt deren Abgabe bei der Abgabestelle 28. Da hier die Umlaufrichtung U schräg von oben gegen unten verläuft, ist die von den Greifern 24 gehaltene Kante 12' der Druckereiprodukte 12 nun nachlaufend. Sie werden mit der nun vorlaufenden, der Kante 12' gegenüberliegenden Kante voraus in die von den Klammern 48 offengehaltenen Druckereierzeugnisse 52 eingeführt. Die Antriebsmittel 34 der Antriebsvorrichtung 32' sind mit dem Wegförderer 30 synchronisiert, so dass in jedes Druckereierzeugnis 52 ein Druckereiprodukt 12 eingeschoben wird. Durch Oeffnen des betreffenden Greifers 24 wird nun das eingeschobene Druckereiprodukt 12 freigegeben. Ist in ein Druckereierzeugnis 52 kein Druckereiprodukt 12 einzuführen oder fehlt ein Druckereierzeugnis 52 im Erzeugnisstrom des Wegförderers 30, wird das der Antriebsvorrichtung 32' zugeordnete Sperrmittel 36 aktiviert, um den entsprechenden Greifer 24 zurückzuhalten. Die Sperrmittel 36 werden dann wieder auf den Wegförderer 30 abgestimmt gelöst, so dass das entsprechende Druckereiprodukt 12 in das richtige Druckereierzeugnis 52 eingeführt wird.

Der Unterschied im Aufnahmetakt und Abgabetakt wird durch die Federelemente 64 aufgenommen. Die Anzahl Transportorgane 20 im Bereich der förderwirksamen Strecke 26 und auch im Bereich der Rückführstrecke kann somit erheblich variieren, ohne dass die Funktionssicherheit beeinträchtigt wäre. Es ist auch möglich, dass zwischen aufeinanderfolgenden Transportorganen 20 Lücken entstehen, d.h. die Schraubendruckfedern 62 nicht an den Wagen 23 anliegen. Da aber die den Antriebsvorrichtungen 32,32' direkt vorgelagerten Schienenabschnitte 60,60' in Umlaufrichtung U gesehen Gefälle aufweisen, ist immer ein Vorrat an Transportorganen 20 vorhanden, die infolge der Schwerkraft auf die Antriebsvorrichtung 32,32' auflaufen. Gespannte Schraubendruckfedern 62 vermitteln dem vom Sperrmittel 36 freigegebenen Transportorgan 20 eine zur Gewichtskraft zusätzliche Beschleunigungskraft, was hohe Geschwindigkeiten der Antriebsmittel 34 zulässt.

Die Bewegung des Rundriemens 88 ist einzig durch die Reibung an den Mitnahmekörpern 84 gegeben. Er wirkt somit dämpfend und ausgleichend auf die Bewegung der Transportorgane 20.

Der Vollständigkeit halber sei erwähnt, dass die Führung 18 in allen Richtungen mit engen Radien gebogen sein kann und selbst Verdrehungen bzw. Verwindungen aufweisen kann. Dies ist insbesondere dadurch ermöglicht, dass die Transportorgane 20 nicht miteinander verbunden sind.

Die Anzahl der vorhandenen Transportorgane 20 ist üblicherweise derart gewählt, dass bei im wesentlichen entspannten Federelementen keine Lücken zwischen diesen und den Transportorganen vorhanden sind. Es ist aber auch möglich, eine kleinere oder eine grössere Anzahl von Transportorganen 20 vorzusehen.

Selbstverständlich können der Zu- und Wegförderer unterschiedlich ausgebildet sein. Insbesondere kann der Wegförderer durch eine trommelartige Verarbeitungseinrichtung ersetzt sein.

Schlussendlich sei erwähnt, dass auch Federelemente 64 bzw. Schraubendruckfedern 62 eingesetzt werden können, die in entspanntem Zustand zu einem Mittenabstand der Transportorgane 20 führen, der sich vom Mittenabstand der Zahnlücken 92 wesentlich unterscheidet. In diesem Fall sind Mittel vorzusehen, um die Transportorgane 20 in einen den Zahnlücken 92 entsprechenden Abstand zu bringen.

## Patentansprüche

1. Endlos umlaufende Stückgut-Transportvorrichtung (16), insbesondere für Druckereiprodukte (12), mit einer Anzahl in einer Führung (18) umlaufender Transportorgane (20), die am Anfang und am Ende ihrer förderwirksamen Strecke (26) von je einer für sich steuerbaren Antriebsvorrichtung (32,32') angetrieben und in ihrer Lage positionierbar sind, um den Uebernahmetakt unabhängig vom Abgabetakt zu regeln, und mit zwischen den jeweils aufeinanderfolgenden Transportorganen (20) angeordneten Federelementen (64) zur Antriebskraftübertragung an ausserhalb der Antriebsvorrichtungen (32,32') befindliche Transportorgane (20) wobei die Antriebsvorrichtungen (32,32') Antriebsmittel (34) zum Antreiben der Transportorgane (20) aufweisen, dadurch gekennzeichnet, dass die Federelemente (64) zur ausschliesslichen Druckkraftübertragung zwischen den Transportorganen (20) ausgebildet sind und die Antriebsvorrichtungen (32,32') ein- und ausschaltbare Mittel zum Verhindern der Mitnahme von Transportorganen (20) durch die Antriebsmittel (34) aufweisen.

2. Transportvorrichtung nach Anspruch 1, dadurch gekennzeichnet, dass die Mittel zum Verhindern der Mitnahme von Transportorganen (20) ein den Antriebsmitteln (34) vorgeschaltetes, in Sperrstellung (132') Transportorgane (20) zurückhaltendes und abgestimmt zu den Antriebsmitteln (34) lösbares Sperrelement (36) aufweisen.

3. Transportvorrichtung nach Anspruch 1 oder 2, dadurch gekennzeichnet, dass die Antriebsvorrichtungen (32, 32') eine den Antriebsmitteln (34) nachgeschaltete, auf die Transportorgane (20) einwirkende Rücklaufsperre (38) aufweisen.

4. Transportvorrichtung nach einem der Ansprüche 1 bis 3, dadurch gekennzeichnet, dass die Antriebsmittei (34) umlaufend angetriebene, gezahnte Antriebselemente (94) und die Transportorgane (20) zahnartige Mitnahmeorgane (96) aufweisen, die zum Kämmen mit den Antriebselementen (94) bestimmt sind.

5. Transportvorrichtung nach Anspruch 4, dadurch gekennzeichnet, dass die Antriebselemente (94) um Räder (118) geführte Ketten (120) aufweisen, an denen hintereinander bügelartig ausgebildete, mehrere Kettenglieder übergreifende Antriebsglieder (122) angeordnet sind, die Führung (18) jeweils entlang eines Antriebabschnitts (128) der Bewegungsbahn der Antriebsglieder (122) verläuft und zwei aufeinanderfolgende Antriebsglieder (122) jeweils eine im Antriebsabschnitt (128) zur Aufnahme eines Mitnahmeorgans (96) eines Transportorgans (20) bestimmte Zahnlücke (98) begrenzen.

6. Transportvorrichtung nach einem der Ansprüche 1 bis 5, dadurch gekennzeichnet, dass die Transportorgane (20) von einem in sich geschlossenen, entlang der Führung (18) verlaufenden riemenartigen Führungs und Dämpfungselement (88) lose durchgriffen sind.

7. Transportvorrichtung nach Anspruch 5 und 6, dadurch gekennzeichnet, dass jedes Antriebsglied (122) beidseitig der Kette (120) je einen Antriebsbügel (124) aufweist und im Antriebsabschnitt (128) das Führungs- und Dämpfungselement (88) zwischen diesen Antriebsbügeln (124) verläuft.

8. Transportvorrichtung nach Anspruch 6 oder 7, dadurch gekennzeichnet, dass das Führungs- und Dämpfungselement (88) aus einem gummielastischen und abriebfesten Material besteht.

9. Transportvorrichtung nach einem der Ansprüche 6 bis 8, dadurch gekennzeichnet, dass die Federelemente (64) das Führungs- und Dämpfungselement (88) lose umgreifende Schraubendruckfedern (62) aufweisen.

10. Transportvorrichtung nach Anspruch 9, dadurch gekennzeichnet, dass die Schraubendruckfedern (62) von den Transportorganen (20) abgetrennt sind.

11. Transportvorrichtung nach einem der Ansprüche 1 bis 10, dadurch gekennzeichnet, dass zwischen den Federelementen (64) bzw. Schraubendruckfedern (62) und den Transportorganen (20), vorzugsweise an letzteren befestigte Dämpfungsorgane (92) angeordnet sind.

12. Transportvorrichtung nach einem der Ansprüche 1 bis 11, dadurch gekennzeichnet, dass den Antriebsvorrichtungen (32,32') unmittelbar vorgeschaltete Abschnitte (60,60') der Führung (18), in Umlaufrichtung (U) gesehen, Gefälle aufweisen.

13. Fördereinrichtung mit einer Transportvorrichtung (16) nach einem der Ansprüche 1 bis 12, dadurch gekennzeichnet, dass der Transportvorrichtung (16) ein Zuförderer (10) zum Zuführen von Stückgut, insbesondere Druckereiprodukten (12), zu einer Uebernahmestelle (14) bei einer mit dem Zuförderer (10) synchronisierten ersten Antriebsvorrichtung (32) der Transportvorrichtung (16) vorgeschaltet ist, und jedes Transportorgan (20) einen steuerbaren Greifer (24) aufweist, der dazu bestimmt ist, bei der Uebernahmestelle (14) jeweils ein Stückgut zu übernehmen, diese zu einer Abgabestelle (28) bei der zweiten Antriebsvorrichtung (32') zu transportieren und dort an einen Wegförderer (30) zu übergeben, wobei die zweite Antriebsvorrichtung (32') in Abhängigkeit vom Wegförderer (30) gesteuert ist.

## Claims

1. Endlessly circulating item - transporting apparatus (16), in particular for printing products (12), with a number of transporting members (20) which circulate in a guide (18), are driven and can be positioned at the beginning and end of their effectively conveying zone (26) by in each case an independently controllable drive mechanism (32, 32') in order to control the take-over cycle independently of the delivery cycle, and with spring elements (64), arranged between the respectively successive transporting members (20), for transferring the drive force to transporting members (20) located outside the drive mechanisms (32, 32'), the drive mechanisms (32, 32') having drive means (34) for driving the transporting members (20), characterized in that the spring elements (64) are designed for the exclusive transfer of compressive force between the transporting members (20), and the drive mechanisms (32, 32') have means which can be switched on and off for preventing the transporting members (20) from being taken along by the drive means (34).

2. Transporting apparatus according to Claim 1, characterized in that the means for preventing the transporting members (20) from being taken along have a blocking element (36) which:- precedes the drive means (34), in the blocking position (132') holds back transporting members (20), and can be released in a manner coordinated with the drive means (34).

3. Transporting apparatus according to Claim 1 or 2, characterized in that the drive mechanisms (32, 32') have a non-return stop (38) which follows the drive means (34) and acts on the transporting members (20).

4. Transporting apparatus according to one of Claims 1 to 3, characterized in that the drive means (34) have toothed drive elements (94) driven in a circulating manner, and the transporting members (20) have tooth-like driving members (96) which are intended for meshing with the drive elements (94).

5. Transporting apparatus according to Claim 4, characterized in that the drive elements (94) have chains (120) which are led around sprockets (118) and on which there are arranged one behind the other drive elements (122) which are designed in a shackle-like manner and engage over a plurality of chain links, the guide (18) in each case runs along a drive section (128) of the path of movement of the drive elements (122), and two successive drive elements (122) in each case bound a tooth gap (98) in the drive section (128) intended for receiving a driving member (96) of a transporting member (20).

6. Transporting apparatus according to one of Claims 1 to 5, characterized in that the transporting members (20) are loosely passed through by a belt-like guiding and damping element (88) which forms a closed loop and runs along the guide (18).

7. Transporting apparatus according to Claim 5 and 6, characterized in that each drive element (122) has on each of both sides of the chain (120) a driving shackle (124) and, in the drive section (128), the guiding and damping element (88) runs between these driving shackles (124).

8. Transporting apparatus according to Claim 6 or 7, characterized in that the guiding and damping element (88) consists of an elastomeric and abrasion-resistant material.

9. Transporting apparatus according to one of Claims 6 to 8, characterized in that the spring elements (64) have helical compression springs (62) engaging loosely around the guiding and damping element (88).

10. Transporting apparatus according to Claim 9, characterized in that the helical compression springs (62) are separate from the transporting members (20).

11. Transporting apparatus according to one of Claims 1 to 10, characterized in that damping members (92) are arranged between the spring elements (64) or helical compression springs (62) and the transporting members (20), preferably fastened on the latter.

12. Transporting apparatus according to one of Claims 1 to 11, characterized in that sections (60, 60') of the guide (18) directly preceding the drive mechanisms (32, 32') have down-gradients, seen in the circulating direction (U).

13. Conveying device with a transporting apparatus (16) according to one of Claims 1 to 12, characterized in that the transporting apparatus (16) is preceded by a supply conveyor (10) for feeding items, in particular printing products (12), to a take-over point (14) at a first drive mechanism (32) of the transporting apparatus (16), synchronized with the feed conveyor (10), and each transporting member (20) has a controllable gripper (24) which is intended for taking over in each case an item at the take-over point (14), transporting them to a delivery point (28) at the second drive mechanism (32'), and transferring them there to a removal conveyor (30), the second drive mechanism (32') being controlled in dependence on the removal conveyor (30).

## Revendications

1. Dispositif circulant sans fin (16) de transport d'articles séparés, notamment pour des articles d'imprimerie (12), comportant un certain nombre d'organes de transport (20), qui circulent dans un guide (18) et sont entraînés au début et à la fin de leur section (26), qui est active pour le transport, par des dispositifs respectifs d'entraînement (32, 32') commandables en soi, et peuvent être positionnés dans leur attitude, pour régler la cadence de transfert indépendamment de la cadence de sortie, et comportant des éléments de ressorts (64) disposés entre des organes successifs respectifs de transport (20), pour la transmission d'une force d'entraînement à des organes de transport (20) situés à l'extérieur des dispositifs d'entraînement (32,32'), les dispositifs d'entraînement (32,32') comportant des moyens d'entraînement (34) servant à entraîner les organes de transport (20), caractérisé en ce que les éléments de ressort (64) sont conçus pour réaliser la transmission exclusive d'une force de compression entre les organes de transport (20), et les dispositifs d'entraînement (32,32') possèdent des moyens pouvant être activés et désactivés, pour empêcher l'entraînement d'organes de transport (20) par les moyens d'entraînement (34).

2. Dispositif de transport selon la revendication 1, caractérisé en ce que les moyens pour empêcher l'entraînement d'organes de transport (20) comprennent un élément de blocage (36), qui est monté en amont des moyens d'entraînement (34) et, dans sa position de blocage (132'), retient des organes de transport (20) et peut être libéré d'une manière réglée par rapport aux moyens d'entraînement (34).

3. Dispositif de transport selon la revendication 1 ou 2, caractérisé en ce que les dispositifs d'entraînement (32,32') possèdent un système de blocage antiretour (38) qui est monté en aval des moyens d'entraînement (34) et agit sur les organes de transport (20).

4. Dispositif de transport selon l'une des revendications 1 à 3, caractérisé en ce que les moyens d'entraînement (34) comportent des éléments d'entraînement dentés (94) entraînés en circulation, et les organes de transport (20) possèdent des organes d'entraînement dentés (96), qui sont destinés à engrener avec les éléments d'entraînement.

5. Dispositif de transport selon la revendication 4, caractérisé en ce que les éléments d'entraînement (94) possèdent des chaînes (120) circulant autour de roues (118) et sur lesquelles sont disposées des organes d'entraînement (122) agencés en forme d'étriers disposés les uns derrière les autres et s'engageant par-dessus plusieurs maillons des chaînes, que le guide (18) s'étend respectivement le long d'une section d'entraînement (128) de la voie de déplacement des organes d'entraînement (122) et que deux organes d'entraînement successifs (122) limitent respectivement un entre-dents (98) destiné, dans la section d'entraînement (128), à recevoir un organe d'entraînement (96) d'un organe de transport (20).

6. Dispositif de transport selon l'une des revendications 1 à 5, caractérisé en ce que les organes de transport (20) sont traversés, de façon lâche, par un élément de guidage et d'amortissement (88) en forme de courroie, fermé sur lui-même et qui s'étend le long du guide (18).

7. Dispositif de transport selon les revendications 5 et 6, caractérisé en ce que chaque organe d'entraînement (122) possède respectivement un étrier d'entraînement (124) des deux côtés de la chaîne (120) et que, dans la section d'entraînement (128), l'élément de guidage et d'amortissement (88) s'étend entre ces étriers d'entraînement (124).

8. Dispositif de transport selon la revendication 6 ou 7, caractérisé en ce que l'élément de guidage et d'amortissement (88) est réalisé en un matériau présentant l'élasticité du caoutchouc et résistant à l'usure.

9. Dispositif de transport selon l'une des revendications 6 à 8, caractérisé en ce que les éléments de ressort (64) possèdent des ressorts hélicoïdaux de pression (62) qui entourent de façon lâche l'élément de guidage et d'amortissement (88).

10. Dispositif de transport selon la revendication 9, caractérisé en ce que les ressorts hélicoïdaux de pression (62) sont séparés des organes de transport (20).

11. Dispositif de transport selon l'une des revendications 1 à 10, caractérisé en ce qu'entre les éléments de ressorts (64) ou les ressorts hélicoïdaux de pression (62) et les organes de transport (20) sont disposés des organes d'amortissement (92) de préférence fixés à ces derniers.

12. Dispositif de transport selon l'une des revendications 1 à 11, caractérisé en ce que des sections (60,60') du guide (18), qui sont montées directement en amont des dispositifs d'entraînement (32,32'), possèdent une inclinaison lorsqu'on regarde dans la direction de circulation (U).

13. Dispositif de convoyage comportant un dispositif de transport (16) selon l'une des revendications 1 à 12, caractérisé en ce qu'en amont du dispositif de transport (16) est monté un convoyeur d'amenée (10) servant à amener les articles individuels, notamment des articles d'imprimerie (12), à un poste de réception (14) dans un premier dispositif d'entraînement (32), qui peut être synchronisé avec le convoyeur d'amenée (10), du dispositif de transport (16), et que chaque organe de transport (20) comporte un organe de préhension commandable (24), qui est destiné à prendre en charge respectivement un article individuel dans le poste de réception (14), à transporter ce dernier jusqu'à un poste de sortie (28) dans le second dispositif d'entraînement (32') et à le transférer, en cet endroit, sur un convoyeur d'évacuation (30), le second dispositif d'entraînement (32') étant commandé en fonction du convoyeur d'évacuation (30).
